(19) Europäisches Patentamt
European Patent Office
Office européen des brevets

(11) **EP 4 365 318 A1**

(12) **EUROPEAN PATENT APPLICATION**
published in accordance with Art. 153(4) EPC

(43) Date of publication:
**08.05.2024 Bulletin 2024/19**

(21) Application number: **22837488.0**

(22) Date of filing: **23.06.2022**

(51) International Patent Classification (IPC):
**C21D 8/12** (2006.01)   **C21D 9/46** (2006.01)
**C22C 38/00** (2006.01)   **C22C 38/38** (2006.01)
**C22C 38/60** (2006.01)   **H01F 1/147** (2006.01)

(52) Cooperative Patent Classification (CPC):
**C21D 8/12; C21D 9/46; C22C 38/00; C22C 38/38;
C22C 38/60; H01F 1/147;** Y02P 10/20; Y02T 10/64

(86) International application number:
**PCT/JP2022/025040**

(87) International publication number:
**WO 2023/282071 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2021   JP 2021111433**

(71) Applicant: **JFE Steel Corporation
Tokyo 100-0011 (JP)**

(72) Inventors:
• **OKUBO, Tomoyuki
Tokyo 100-0011 (JP)**
• **ZAIZEN, Yoshiaki
Tokyo 100-0011 (JP)**
• **TANAKA, Takaaki
Tokyo 100-0011 (JP)**
• **SUEHIRO, Ryuichi
Tokyo 100-0011 (JP)**
• **MIYAMOTO, Yukino
Tokyo 100-0011 (JP)**

(74) Representative: **Hoffmann Eitle
Patent- und Rechtsanwälte PartmbB
Arabellastraße 30
81925 München (DE)**

(54) **NON-ORIENTED ELECTROMAGNETIC STEEL SHEET AND METHOD FOR MANUFACTURING SAME**

(57)   When producing a non-oriented electrical steel sheet by subjecting a slab containing predetermined amounts of C, Si, Mn, Al, N, and Cr to hot rolling, hot-band annealing, cold rolling, and finishing annealing in a continuous annealing furnace, the following conditions are used: a maximum reached temperature in the finishing annealing is set to be lower than 900°C; an average cooling rate from a temperature (maximum reached temperature - 50°C) to 500°C in a cooling process of the finishing annealing is set to 40°C/s or higher; and a parameter $\varepsilon/t$ defined from a plastic elongation ratio $\varepsilon$ (%) in a rolling direction between before and after the finishing annealing and a soaking time t (s) in the finishing annealing is set to 0.10 or higher. Thus, a non-oriented electrical steel sheet with high strength and low iron loss in a high frequency range is obtained, which has an average ferrite grain size of smaller than 50 $\mu$m and a yield stress of 500 MPa or higher, and in which compressive residual stresses $\sigma_s$ and $\sigma_c$ in a sheet width direction at a steel sheet surface and a sheet-thickness center part, respectively, obtained by an X-ray stress measurement method are both 2.0 MPa or higher.

FIG. 1

EP 4 365 318 A1

**Description**

Technical Field

The present invention relates to a non-oriented electrical steel sheet having high strength as well as low eddy current loss in a high frequency range, and to a production method thereof.

Background Art

From the viewpoint of not only increasing efficiency but also saving space and reducing weight, motors such as driving motors of electric vehicles (EVs), hybrid electric vehicles (HEVs), etc. and motors used for compressors of high-efficiency air conditioners are required to be small in size and aimed to achieve higher-speed rotation to secure output. As the material of the iron cores of these motors, non-oriented electrical steel sheets that are a soft magnetic material are mainly used.

As the centrifugal force acting on a rotor is proportional to the square of the rotation speed, one challenge to be solved in designing a motor that rotates at high speed is to prevent the rotor from breaking. Therefore, in a motor that rotates at high speed, a steel sheet that constitutes the material of the rotor is enhanced in strength by means such as making the crystal grains smaller or leaving a non-recrystallized texture.

Since an excitation waveform of a rotor includes harmonics (slot harmonics) of about 1 Hz to 10 kHz attributable to the motor structure, an increase in iron loss due to these harmonics also poses a problem. To solve this problem, the non-oriented electrical steel sheet that is the iron core material is strongly desired not only to have high strength but also to reduce the iron loss in a high frequency range.

An iron loss $W$ of a non-oriented electrical steel sheet is the sum of a hysteresis loss $W_h$ and an eddy current loss $W_e$, and these losses are proportional to the first power and the second power, respectively, of the frequency, so that the eddy current loss $W_e$ becomes dominant in a high frequency range. As a countermeasure, reducing the eddy current loss by increasing the alloy content has been hitherto explored (e.g., see Patent Literatures 1 and 2).

While increasing the alloy content is an effective means for reducing the iron loss of a non-oriented electrical steel sheet in a high frequency range, it also increases the strength of steel, which raises another problem that the steel sheet becomes difficult to cold-roll. As a solution, Patent Literature 1 proposes adopting warm rolling for cold rolling, and Patent Literature 2 proposes using Mn to restrain the increase of the strength of steel.

Citation List

Patent Literature

      Patent Literature 1: JP-2014-210978A
      Patent Literature 2: JP-2008-231504A

Summary of Invention

Technical Problem

However, the warm rolling proposed in Patent Literature 1 has a problem in that the steel sheet after rolling is poorly shaped when the temperature of the steel sheet at the start of rolling is raised too much, which puts a limit on applying this technique to industrial production. The method of using Mn proposed in Patent Literature 2 requires a large amount of Mn to be added to achieve a sufficient iron loss reducing effect, and thus faces problems such as that the raw material cost increases and that the iron loss tends to become unstable due to generation of Mn carbide.

The present invention has been devised in view of the above-described problems with the prior art, and an object thereof is to reduce the eddy current loss in a high frequency range by means other than increasing the alloy content and thereby provide a non-oriented electrical steel sheet having high strength as well as low iron loss in a high frequency range, and to propose an advantageous production method thereof.

Solution to Problem

To solve the above-described problems, the present inventors have vigorously explored measures to reduce the eddy current loss of a non-oriented electrical steel sheet, on the premise of using a technique of leaving a non-recrystallized texture as a means for achieving higher strength, and with a focus on a technique of reducing the iron loss by applying tensile stress to a steel sheet that is employed for grain-oriented electrical steel sheets. As a result, we found that controlling the value of stress remaining in a product steel sheet within an appropriate range could reduce the eddy current loss in a high frequency range even at high strength, and eventually developed the present invention.

The present invention based on this insight is a non-oriented electrical steel sheet characterized in that: an average ferrite grain size is smaller than 50 $\mu$m; a yield stress is 500 MPa or higher; and compressive residual stresses $\sigma_s$ and $\sigma_c$ in a sheet width direction at a steel sheet surface and a sheet-thickness center part, respectively, measured by an X-ray stress measurement method are each 2.0 MPa or higher, wherein, as the X-ray stress measurement method, a $2\theta$-$\sin^2\psi$ method using an $\alpha$-Fe (211) peak is used.

The above-described non-oriented electrical steel sheet of the present invention is characterized by having an ingredient composition containing C: 0 to 0.0050 mass%, Si: 2.0 to 5.0 mass%, Mn: 0 to 3.0 mass%, P: 0 to 0.2 mass%, S: 0 to 0.0050 mass%, Al: 0 to 3.0 mass%, N: 0 to 0.0050 mass%, Cr: 0 to 3.0 mass%, and O: 0 to 0.0050 mass%, with the rest composed of Fe and inevitable impurities.

The above-described non-oriented electrical steel sheet of the present invention is characterized by further containing at least one group selected from the following Groups A to D, in addition to the above-described ingredient composition:

- Group A: at least one of Sn: 0 to 0.20 mass% and Sb: 0 to 0.20 mass%;
- Group B: at least one of Ca: 0 to 0.01 mass%, Mg: 0 to 0.01 mass%, and REM: 0 to 0.05 mass%;
- Group C: at least one of Cu: 0 to 0.5 mass% and Ni: 0 to 0.5 mass%; and
- Group D: at least one of Ge: 0 to 0.05 mass%, As: 0 to 0.05 mass%, and Co: 0 to 0.05 mass%.

The above-described non-oriented electrical steel sheet of the present invention is characterized by further containing at least one group selected from the following Groups E to I in addition to the above-described ingredient composition:

- Group E: at least one of Ti: 0 to 0.005 mass%, Nb: 0 to 0.005 mass%, V: 0 to 0.010 mass%, and Ta: 0 to 0.002 mass%;
- Group F: at least one of B: 0 to 0.002 mass% and Ga: 0 to 0.005%;
- Group G: Pb: 0 to 0.002 mass%;
- Group H: Zn: 0 to 0.005 mass%; and
- Group I: at least one of Mo: 0 to 0.05 mass% and W: 0 to 0.05 mass%.

The above-described non-oriented electrical steel sheet of the present invention is characterized in that a non-recrystallized texture in a cross-section along a sheet thickness parallel to a rolling direction accounts for 1% or more as an area ratio.

Further, the present invention proposes a production method of a non-oriented electrical steel sheet in which a slab having any one of the above-described ingredient compositions is subjected to hot rolling, hot-band annealing, cold rolling, and finishing annealing in a continuous annealing furnace, characterized in that: a maximum reached temperature in the finishing annealing is set to be lower than 900°C; an average cooling rate from a temperature (maximum reached temperature - 50°C) to 500°C in a cooling process of the finishing annealing is set to 40°C/s or higher; and a parameter $\varepsilon$/t defined from a plastic elongation ratio $\varepsilon$ (%) in a rolling direction between before and after the finishing annealing and a soaking time t (s) in the finishing annealing is set to 0.10 or higher.

Advantageous Effects of Invention

The present invention can enhance the strength of a non-oriented electrical steel sheet and reduce the iron loss thereof in a high frequency range without using a means that adversely affects the production cost and productivity, such as increasing the alloy content or reducing the thickness. Thus, when used for the rotor cores of motors such as driving motors of EVs, HEVs, etc. and motors for compressors of high-efficiency air conditioners, the non-oriented electrical steel sheet of the present invention contributes significantly to increasing the efficiency and reducing the size of the motors.

Brief Description of Drawings

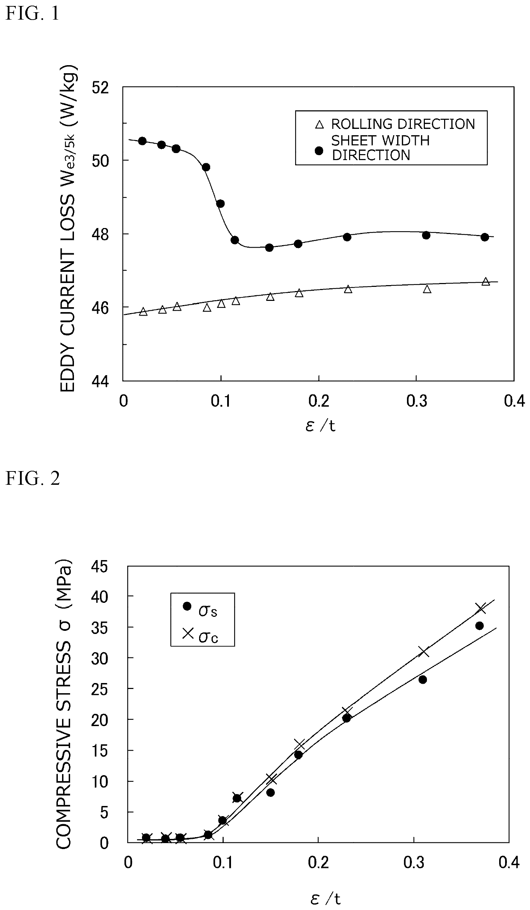

FIG. 1 is a graph showing a relationship between a ratio $\varepsilon$/t between a plastic elongation ratio $\varepsilon$ (%) and a soaking time t (s) in finishing annealing, and an eddy current loss $W_{e3/5k}$ in a rolling direction and a sheet width direction of a steel sheet.

FIG. 2 is a graph showing a relationship between the ratio $\varepsilon/t$ between the plastic elongation ratio $\varepsilon$ (%) and the soaking time t (s) in finishing annealing, and compressive residual stresses $\sigma_s$ and $\sigma_c$ in the sheet width direction at a steel sheet surface and a sheet-thickness center part.

Description of Embodiment

An experiment that led to the development of the present invention will be described.

In the field of grain-oriented electrical steel sheets, it is known that applying tensile stress to a steel sheet in a rolling direction subdivides the magnetic domains and reduces the eddy current loss. Therefore, as a method of reducing the eddy current loss in a non-oriented electrical steel sheet, the present inventors focused on applying residual stress to a product steel sheet. As a method of introducing residual stress into the product steel sheet, we adopted tension annealing in finishing annealing, and studied the influence of the residual stress on the iron loss properties by the following experiment.

Steel having an ingredient composition containing C: 0.0015 mass%, Si: 3.37 mass%, Mn: 0.40 mass%, P: 0.01 mass%, S: 0.0009 mass%, Al: 0.91 mass%, N: 0.0018 mass%, Cr: 0.02 mass%, and O: 0.0012 mass%, with the rest composed of Fe and inevitable impurities was produced in a vacuum melting furnace and cast into a steel ingot. Then, this steel ingot was hot-rolled into a 1.5 mm-thick hot-rolled sheet. Next, this hot-rolled sheet was subjected to hot-band annealing at 1000°C for 30 seconds in an $N_2$ atmosphere, and was then cold-rolled into a 0.3 mm-thick cold-rolled sheet. Then, this cold-rolled sheet was subjected to finishing annealing in an atmosphere of a mixed gas of $H_2$ : $N_2$ = 3 : 7 as a vol% ratio, while tensile stress of 5 to 20 MPa was applied in the rolling direction of the cold-rolled sheet. In the finishing annealing, a soaking treatment of holding the cold-rolled sheet within a temperature range of a maximum reached temperature, which was set to 780°C, to (maximum reached temperature - 10°C) for 1 to 30 seconds was performed, and then gas cooling from a temperature (maximum reached temperature - 50°C) to 500°C at an average cooling rate of 50°C/s was performed to obtain a product sheet. In the process, marking off lines were scratched on the surface of the steel sheet before the finishing annealing in the sheet width direction, and the intervals between the marking off lines before and after the finishing annealing were measured to obtain a plastic elongation ratio $\varepsilon$ (%) in the rolling direction from the difference between these intervals. Here, the plastic elongation ratio $\varepsilon$ is an elongation ratio of nominal strain. In the present invention, the time of remaining within the temperature range of the maximum reached temperature to (maximum reached temperature - 10°C) is defined as a soaking time.

From the product sheet obtained as described above, 30 mm-wide and 100 mm-long Epstein test specimens were cut out in each of the rolling direction and the sheet width direction. The iron loss W at a maximum magnetic flux density of 0.3 T and a frequency f within a range of 50 to 5 kHz was measured by a single-sheet magnetic measurement method.

Next, from the measured relationship between the frequency f and the iron loss value W, the hysteresis loss $W_h$ and the eddy current loss $W_e$ were separated using a dual-frequency method to be described below. First, the relationship between W/f and f in a range of 50 to 1000 Hz was plotted, and an approximate expression of W/f = af + b was obtained by the least squares method. Here, the coefficient a and the intercept b are constants. As the intercept b is a hysteresis loss per cycle, multiplying the intercept b by the frequency f yields the hysteresis loss $W_h$ (f) at the frequency f. On the other hand, the eddy current loss $w_e$ (f) is obtained by subtracting this hysteresis loss $W_h$ (f) from the measured iron loss value W at the frequency f: $W_e$ (f) = W - $W_h$ (f). The result of this experiment was analyzed with attention paid to an eddy current loss $W_{e3/5k}$ at a maximum magnetic flux density of 0.3 T and a frequency of 5 kHz as an index of the increase in iron loss due to harmonics.

To study the strength properties of the product sheet, JIS No. 5 test specimens with the tensile direction oriented in the rolling direction were taken from the steel sheet after the finishing annealing, and a tensile test was conducted in accordance with JIS Z 2241 to measure the yield stress. As a result, the variation in yield stress was small, with the yield stress of each test specimen falling within a range of 520 to 540 MPa. A cross-section of the product sheet along the sheet thickness perpendicular to the sheet width direction (a cross-section along the sheet thickness parallel to the rolling direction) was etched with a Nital solution or the like to reveal the microstructure, and then an average grain size (an average line segment length per crystal of the test line) was measured by a cutting method. As a result, the variation in average grain size was small, with each average grain size falling within a range of 17 to 20 $\mu$m.

FIG. 1 shows a relationship between the parameter $\varepsilon/t$ defined from the plastic elongation ratio $\varepsilon$ (%) and the soaking time t (s) in the finishing annealing and the eddy current loss $W_{e3/5k}$ in the rolling direction and the sheet width direction of the steel sheet. From this graph, it can be seen that when $\varepsilon/t$ is set to 0.10 or higher, $W_{e3/5k}$ in the rolling direction increases slightly, while $W_{e3/5k}$ in the sheet width direction decreases significantly, so that an average iron loss value in the rolling direction and the sheet width direction decreases.

Next, the present inventors explored the reason why setting $\varepsilon/t$ to 0.10 or higher led to a lower eddy current loss as described above. As a result, we found that this decrease in eddy current loss is closely correlated with residual stress in the product sheet. Here, the residual stress is a value that was measured by an X-ray stress measurement method, and particularly, MSF-2M manufactured by Rigaku Corporation was used as the X-ray measurement device. Using a Cr tube ($k\beta$ filter: V) as the X-ray source with the output set to 30 kV $\times$ 4 mV, X-ray scanning was performed on a region of 7 mm $\times$ 7 mm in the surface of a test specimen by a $2\theta$-$\sin^2\psi$ method (iso-inclination $\psi$ constant method), and a strength distribution near $20 = 156.4°$ corresponding to $\alpha$-Fe (211) was measured. The angle $\psi$ was set to 12, 16, 20, 24, 28, 32, 36, 40, 44, and 48°, and the angle of oscillation of $\psi$ was set to within a range of $\pm 3°$. Next, diffraction angles $2\theta$ that indicated a peak in the measured strength distribution were plotted in a $2\theta$-$\sin^2\psi$ diagram as diffraction angles $2\theta$ at the respective angles $\psi$. The inclination of the resulting straight line was obtained by the least squares method, and the residual stress $\sigma$ (MPa) was obtained using the following formula:

$$\sigma = 317.91 \cdot \Delta 2\theta / \Delta \sin^2 \psi$$

In the $2\theta$-$\sin^2\psi$ method, stress within a plane of the specimen in an arbitrary direction can be measured by changing the scanning plane of the X-ray. Measurement of the residual stress $\sigma$ was performed at two locations, a surface and a sheet-thickness center part, of the test specimen, and the residual stress at the surface and the residual stress at the sheet-thickness center part were represented by $\sigma_s$ and $\sigma_c$, respectively. Measurement of the sheet-thickness center part was performed by removing a portion of the test specimen from the surface on one side to the center part by chemical grinding. Here, when the residual stress $\sigma$ is a positive value, this means that there is compressive residual stress in the material, and conversely, when it is a negative value, this means that there is tensile residual stress in the material.

FIG. 2 shows a relationship between the compressive residual stresses $\sigma_s$ and $\sigma_c$ in the sheet width direction at the steel sheet surface and the sheet-thickness center part obtained by the above-described measurement and the iron loss $W_{e3/5k}$ in the sheet width direction. From FIG. 2 and FIG. 1 described above, it can be seen that when the compressive residual stresses become higher, $W_{e3/5k}$ in the sheet width direction becomes lower.

While this mechanism has not yet been sufficiently clarified, the present inventors believe as follows.

When finishing annealing is performed on a steel sheet while tensile stress is applied thereto, at high temperatures, plastic deformation progresses concurrently with recrystallization and grain growth. Here, as the yield stress for plastic deformation varies depending on the crystal orientation, in a polycrystalline body, the amount of plastic strain introduced into the crystal grains is not uniform but varies among the crystal grains. Therefore, if a state can be created in which tensile residual stress occurs in <100> that is an easy axis of magnetization and compressive residual stress occurs in <110>, <111>, <112>, etc. that are other hard axes of magnetization, the magnetic domains would become subdivided and the eddy current loss would decrease. Such conditions would be realized through tension annealing of finishing annealing. In tension annealing of finishing annealing, it would be important to rapidly cool the steel sheet after plastically deforming it at a high temperature in a short time such that residual stress and strain are not released through recrystallization or recovery.

The present invention has been developed based on this new insight.

Next, an ingredient composition that the non-oriented electrical steel sheet of the present invention should have will be described.

C: 0 to 0.0050 mass%

C is an ingredient that forms carbide in a product sheet by magnetic aging and deteriorates the iron loss. To restrict the magnetic aging, C should be within a range of 0 to 0.0050 mass%. A preferable range is 0.0001 to 0.0020 mass%.

Si: 2.0 to 5.0 mass%

Si has an effect of enhancing the specific resistance of steel and reducing the iron loss. It also has an effect of enhancing the strength of steel through solid solution strengthening. From the viewpoint of achieving such a low iron loss and high strength, the lower limit of Si should be 2.0 mass%. On the other hand, when Si exceeds 5.0 mass%, rolling becomes difficult. Therefore, the upper limit should be 5.0 mass%. A preferable range is 3.5 to 5.0 mass%. From the viewpoint of securing a particularly excellent balance between strength and iron loss, a preferable range is 3.5 to 4.5 mass%.

Mn: 0 to 3.0 mass%

Mn has an effect of enhancing the specific resistance of steel and reducing the iron loss. However, when Mn exceeds 3.0 mass%, it conversely worsens the iron loss through precipitation of carbonitride. Therefore, Mn should be added within a range of 0 to 3.0 mass%. To reliably achieve the aforementioned iron loss reducing effect, it is preferable that Mn be added at a ratio of 0.3 mass% or more, with the upper limit preferably being 2.0 mass% from the viewpoint of restricting the generation of carbonitride.

P: 0 to 0.2 mass%

P is an ingredient used to adjust the strength of steel and can be added as appropriate. However, when P exceeds 0.2 mass%, steel becomes brittle and difficult to roll. Therefore, the content of P should be within a range of 0 to 0.2 mass%. In the case where P is not used for strength adjustment, the content is preferably less than 0.02 mass%, whereas in the case where P is used for that purpose, the content is preferably within a range of 0.02 to 0.10 mass%.

S: 0 to 0.0050 mass%

S is a harmful ingredient that hinders the grain growth by precipitating fine sulfide and increases the iron loss. In particular, when S exceeds 0.0050 mass%, these adverse effects become pronounced. Therefore, the content of S should be within a range of 0 to 0.0050 mass%. A preferable upper limit is 0.0020 mass%.

Al: 0 to 3.0 mass%

Al has an effect of enhancing the specific resistance of steel and reducing the iron loss. It also has an effect of enhancing the strength of steel through solid solution strengthening. However, when Al exceeds 3.0 mass%, rolling becomes difficult. Therefore, the content of Al should be within a range of 0 to 3.0 mass%. A preferable range is 1.2 to 3.0 mass%. From the viewpoint of securing a particularly excellent balance between strength and iron loss, a more preferable range is 1.2 to 2.5 mass%. On the other hand, Al is an ingredient that increases the likelihood of formation of cavities during casting and solidification. Therefore, when recyclability is emphasized, the content is preferably limited to 0.01 mass% or less.

N: 0 to 0.0050 mass%

N is a harmful ingredient that hinders the grain growth by precipitating fine nitride and increases the iron loss. In particular, when N exceeds 0.0050 mass%, these adverse effects become pronounced. Therefore, the content of N should be within a range of 0 to 0.0050 mass%. A preferable upper limit is 0.0020 mass%.

Cr: 0 to 3.0 mass%

Cr has an effect of enhancing the specific resistance of steel and reducing the iron loss. However, when Cr exceeds 3.0 mass%, it conversely worsens the iron loss through precipitation of carbonitride. Therefore, the content of Cr should be within a range of 0 to 3.0 mass%. When Cr is less than 0.3 mass%, the aforementioned iron loss reducing effect is low. Therefore, when iron loss is emphasized, Cr is preferably added at a ratio of 0.3 mass% or more. From the viewpoint of restricting the generation of carbonitride, a preferable upper limit is 2.0 mass%.

O: 0 to 0.0050 mass%

O is a harmful ingredient that hinders the grain growth by forming oxide-based inclusions and increases the iron loss. In particular, when O exceeds 0.0050 mass%, these adverse effects become pronounced. Therefore, the content of O should be within a range of 0 to 0.0050 mass%. A preferable upper limit is 0.0020 mass%.
The non-oriented electrical steel sheet of the present invention may further contain the following ingredients in addition to the above-described ingredients according to the required properties.

At least one of Sn: 0 to 0.20 mass% and Sb: 0 to 0.20 mass%

Sn and Sb have an effect of improving the recrystallization texture and reducing the iron loss, and can be added as appropriate. However, there is no use in adding Sn and Sb at a ratio exceeding 0.20 mass%, as this effect saturates. Therefore, a preferable upper limit is 0.20 mass% each. A more preferable range is 0.005 to 0.01 mass% each.

At least one selected from Ca: 0 to 0.01 mass%, Mg: 0 to 0.01 mass%, and REM: 0 to 0.05 mass%

Ca, Mg, and REM (rare-earth metal) form stable sulfide and reduce fine sulfide, and thus have an effect of improving the grain growth properties and thereby the iron loss. However, excessively adding these ingredients conversely increases the iron loss. Therefore, when adding these ingredients, preferable upper limits are Ca: 0.01 mass%, Mg: 0.010 mass%, and REM: 0.05 mass%. More preferable ranges are Ca: 0.001 to 0.005 mass%, Mg: 0.0005 to 0.003 mass%, and REM: 0.005 to 0.03 mass%.

The non-oriented electrical steel sheet of the present invention may further contain the following ingredients within the following ranges in addition to the above-described ingredients.

At least one of Cu: 0 to 0.5 mass% and Ni: 0 to 0.5 mass%

Cu and Ni are effective ingredients in enhancing the toughness of steel and can be added as appropriate. However, this effect will be saturated when Cu and Ni are added at a ratio exceeding 0.5 mass% each. Therefore, a preferable upper limit is 0.5 mass% each. A more preferable range is 0.01 to 0.1 mass% each.

At least one of Ge: 0 to 0.05 mass%, As: 0 to 0.05 mass%, and Co: 0 to 0.05 mass%

Ge, As, and Co are effective ingredients for enhancing the magnetic flux density and reducing the iron loss, and can be added as appropriate. However, there is no use in adding Ge, As, and Co at a ratio exceeding 0.05 mass% each, as this effect saturates. Therefore, a preferable upper limit is 0.05 mass% each. A more preferable range is 0.002 to 0.01 mass% each.

The non-oriented electrical steel sheet of the present invention may further contain the following ingredients within the following ranges in addition to the above-described ingredients.

At least one of Ti: 0 to 0.005 mass%, Nb: 0 to 0.005 mass%, V: 0 to 0.010 mass%, and Ta: 0 to 0.002 mass%

Ti, Nb, V, and Ta are harmful ingredients that form fine carbonitride and increase the iron loss, and particularly these adverse effects become pronounced when the above upper limit values are exceeded. Therefore, it is preferable that Ti, Nb, V, and Ta be contained within the following ranges: Ti: 0 to 0.005 mass%, Nb: 0 to 0.005 mass%, V: 0 to 0.010 mass%, and Ta: 0 to 0.002 mass%. More preferable upper limit values are Ti: 0.002 mass%, Nb: 0.002 mass%, V: 0.005 mass%, and Ta: 0.001 mass%.

At least one of B: 0 to 0.002 mass% and Ga: 0 to 0.005 mass%

B and Ga are harmful ingredients that form fine nitride and increase the iron loss, and particularly these adverse effects become pronounced when the above upper limit values are exceeded. Therefore, it is preferable that B and Ga be added within the following ranges: B: 0 to 0.002 mass% and Ga: 0 to 0.005 mass%. More preferable upper limit values are B: 0.001 mass% and Ga: 0.002 mass%.

Pb: 0 to 0.002 mass%

Pb is a harmful ingredient that forms fine Pb grains and increases the iron loss, and particularly these adverse effects become pronounced when 0.002 mass% is exceeded. Therefore, Pb is preferably contained within a range of 0 to 0.002 mass%. A more preferable upper limit value is 0.001 mass%.

Zn: 0 to 0.005 mass%

Zn is a harmful ingredient that increases fine inclusions and increases the iron loss, and particularly these adverse effects become pronounced when 0.005 mass% is exceeded. Therefore, Zn is preferably contained at a content ratio within a range of 0 to 0.005 mass%. A more preferable upper limit value is 0.003 mass%.

At least one of Mo: 0 to 0.05 mass% and W: 0 to 0.05 mass%

Mo and W are harmful ingredients that form fine carbide and increase the iron loss, and particularly these adverse effects become pronounced when the above upper limit values are exceeded. Therefore, Mo and W are preferably contained within the following ranges: Mo: 0 to 0.05 mass% and W: 0 to 0.05 mass%. More preferable upper limit values are Mo: 0.02 mass% and W: 0.02 mass%.

The rest of the non-oriented electrical steel sheet of the present invention other than the above-described ingredients is substantially composed of Fe and inevitable impurities.

Next, the non-oriented electrical steel sheet of the present invention will be described.

Yield stress: 500 MPa or higher

First, to prevent breakage of motors rotating at high speed, it is important for the non-oriented electrical steel sheet of the present invention to have a yield stress of 500 MPa or higher. This yield stress is a value obtained by conducting a tensile test in accordance with JIS Z 2241 using JIS No. 5 tensile test specimens with the tensile direction oriented in the rolling direction. The yield stress refers to the upper yield point when discontinuous yielding is recognized, and to the 0.2% bearing force when it is not. A preferable yield stress is within a range of 600 to 800 MPa.

Ferrite average grain size: smaller than 50 $\mu$m

To achieve the aforementioned high strength, it is important for the non-oriented electrical steel sheet of the present invention to have an average ferrite grain size smaller than 50 $\mu$m. When the ferrite grain size is 50 $\mu$m or larger, breakage of rotors due to reduced strength poses a problem. A preferable average grain size is 25 $\mu$m or smaller. The average grain size refers to the value of an average grain size (an average line segment length per crystal of a test line) as measured by the cutting method in a microstructure revealed by etching a cross-section along the sheet thickness perpendicular to the sheet width direction (a cross-section along the sheet thickness in the rolling direction) with a Nital solution or the like.

For the non-oriented electrical steel sheet of the present invention to achieve the aforementioned high strength, it is preferable that, in addition to the crystal grains being finer, when the cross-section along the sheet thickness parallel to the rolling direction is observed, a non-recrystallized texture remain at an area ratio of 1% or more. A more preferable range is 10 to 42%. The average ferrite grain size when a non-recrystallized texture remains refers to the average grain size of only crystal grains that have recrystallized.

$\sigma_s$: 2.0 MPa or higher, $\sigma_c$: 2.0 MPa or higher

In the non-oriented electrical steel sheet of the present invention, it is required that the compressive residual stress $\sigma_c$ in the sheet width direction at the steel sheet surface and the compressive residual stress $\sigma_c$ at the sheet-thickness center part obtained by the X-ray stress measurement method are both 2.0 MPa or higher. It is preferable that $\sigma_s$ be 5 MPa or higher and that $\sigma_c$ be 5 MPa or higher. Here, the X-ray stress measurement method is a $2\theta$-$\sin^2\psi$ method using an $\alpha$-Fe (211) peak, and the measured compressive stress is a value calculated from the lattice spacing in the {211} plane of Fe. The compressive stress detected here is a value calculated from the lattice spacing in the {211} plane of Fe, and it is presumed that tensile stress is conversely applied to the easy axis of magnetization <100> of each crystal grain. When the value of the residual compressive stress exceeds 100 MPa, micro-yielding occurs inside some crystal grains. Therefore, a preferable upper limit is 100 MPa.

The residual stress introduced in the present invention is required to be nearly uniform in the sheet thickness direction. This is because the advantageous effects of the present invention cannot be obtained when the residual stress varies in the sheet thickness direction. For example, when compressive stress is applied to a surface layer of the steel sheet by shot-blasting, tensile stress conversely occurs at the sheet-thickness center part, so that the advantageous effects of the present invention cannot be obtained.

Next, a production method of the non-oriented electrical steel sheet of the present invention will be described.

A steel material (slab) used to produce the non-oriented electrical steel sheet of the present invention can be produced by performing secondary refining, such as a vacuum degassing treatment, on molten steel produced in a converter, an electric furnace, or the like to adjust the ingredient composition to the one described above, and then performing a continuous casting method or an ingot making-blooming method.

Next, the above-described slab is hot-rolled into a hot-rolled sheet by a commonly known method and conditions. After subjected to hot-band annealing as necessary, this hot-rolled sheet is pickled, and one time of cold rolling, or two or more times of cold rolling with intermediate annealing between each rolling, is performed thereon to obtain a cold-rolled sheet of a final sheet thickness (product sheet thickness).

Next, to impart desired strength and magnetic properties to the cold-rolled sheet, finishing annealing is performed using a continuous annealing furnace. From the viewpoint of securing both high strength and productivity, preferable conditions of this finishing annealing are a maximum reached temperature lower than 900°C and a soaking time within a range of 1 to 120 seconds. A more preferable maximum reached temperature is within a range of 650 to 850°C, and a more preferable soaking time is within a range of 5 to 30 seconds. From the viewpoint of restricting oxidation, the atmosphere during the finishing annealing is preferably a reducing atmosphere, such as an atmosphere of a dry $H_2$-$N_2$ mixture.

Here, the most important thing to obtain the advantageous effects of the present invention is that it is necessary to set the parameter $\varepsilon/t$ defined from the plastic elongation ratio $\varepsilon$ (%) in the rolling direction between before and after the finishing annealing and the soaking time t (s) in the finishing annealing to 0.10 or higher. When this parameter $\varepsilon/t$ is

lower than 0.10, ε is so low that sufficient residual stress fails to be introduced into the steel sheet, or t is so long that residual stress disappears due to recovery. A preferable parameter ε/t is 0.15 or higher.

The plastic deformation behavior during the finishing annealing varies depending on the ingredient composition of the steel sheet, the finishing annealing conditions (the annealing temperature and the temperature rising time), and the line tension. Therefore, particularly in a steel sheet containing large amounts of Si and Al that have high strength at high temperatures, ε/t can be increased by raising the annealing temperature or increasing the line tension.

Another thing important in the finishing annealing is that it is necessary to set the average cooling rate from a temperature (maximum reached temperature - 50°C) to 500°C in the cooling process after the soaking treatment to 40°C/s or higher so that the residual stress introduced into the steel sheet in a high temperature range remains until room temperature is reached. When the average cooling rate in this temperature range is lower than 40°C/s, the residual stress introduced at a high temperature is released through recovery, so that the advantages of the present invention cannot be obtained. A preferable average cooling rate is 50°C/s or higher.

As necessary, an insulation coating is applied to the steel sheet after the finishing annealing to obtain a product sheet. As the insulation coating, a commonly known organic, inorganic, or both organic and inorganic coating can be used, with none of them diminishing the advantageous effects of the present invention.

Example 1

Steel having an ingredient composition containing C: 0.0013 mass%, Si: 3.76 mass%, Mn: 0.52 mass%, P: 0.006 mass%, S: 0.0004 mass%, Al: 1.32 mass%, N: 0.0009 mass%, Cr: 0.05 mass%, Sn: 0.04 mass%, and O: 0.0013 mass%, with the rest composed of Fe and inevitable impurities was produced by an ordinary refining process and continuously cast into a steel material (slab). Next, this slab was heated at a temperature of 1140°C for 30 minutes, and was then hot-rolled into a 1.8 mm-thick hot-rolled sheet. Next, this hot-rolled sheet was subjected to hot-band annealing at 950°C for 30 seconds, and was then pickled and cold-rolled into a cold-rolled sheet with a final sheet thickness (product sheet thickness) of 0.25 mm. Next, this cold-rolled sheet was subjected to finishing annealing in a continuous annealing furnace under the various conditions shown in Table 1. In the process, the plastic elongation ratio ε (%) between before and after the finishing annealing was measured by the above-described method.

From the finishing-annealed sheet thus obtained, 30 mm-wide and 280 mm-long test specimens with the length direction oriented in the sheet width direction were taken. The iron loss $W_{3/5k}$ was measured by an Epstein test, and the value of the eddy current loss $W_{e3/5k}$ at 0.3 T and 5 kHz was calculated by the above-described method. Further, the residual stresses $\sigma_s$ and $\sigma_c$ in the sheet width direction of the finishing-annealed sheet were measured by the above-described method. In addition, JIS No. 5 test specimens with the tensile direction oriented in the rolling direction were taken from the finishing-annealed sheet, and a tensile test was conducted in accordance with JIS Z 2241 to measure the yield stress.

The results of these measurements are included in Table 1.

According to these results, the non-oriented electrical steel sheets produced under conditions complying with the present invention each exhibited high strength and a low value of the eddy current loss $W_{e3/5k}$. By contrast, in the steel sheets No. 1 to 4, 6, 7, and 17 to 20, for each of which ε/t or the cooling rate in the finishing annealing was not appropriate, desired residual stress was not achieved and the eddy current loss $W_{e3/5k}$ was not reduced. In the steel sheets No. 23 and 24 that are examples in which residual stress (compressive stress) was introduced to the steel sheet surface of the finishing-annealed sheet by shot-peening, $\sigma_s$ became compressive stress and the eddy current loss $W_{e3/5k}$ conversely increased. In the steel sheet No. 26, due to the maximum reached temperature of the finishing annealing exceeding 900°C, the yield stress decreased to below 500 MPa.

[Table 1]

| № | Finishing annealing condition | | | | | Residual stress | | Steel sheet properties | | | | Other conditions | Remarks |
|---|---|---|---|---|---|---|---|---|---|---|---|---|---|
| | Maximum reached temperature (°C) | Soaking time (s) | Line tension (MPa) | ε/t | Cooling rate (°C/s) | $\sigma_S$ (MPa) | $\sigma_C$ (MPa) | Ferrite grain size (μm) | Non-recrystallized ratio (%) | Eddy current loss $W_{e3/5k}$ (W/kg) | Yield stress (MPa) | | |
| 1 | 800 | 20 | 6 | 0.02 | 50 | 0.4 | 0.8 | 22 | 0 | 36.4 | 591 | - | Comparative Example |
| 2 | 800 | 20 | 7 | 0.04 | 50 | 0.6 | 0.8 | 23 | 0 | 36.3 | 592 | - | Comparative Example |
| 3 | 800 | 20 | 7.5 | 0.07 | 50 | 1.6 | 2.1 | 22 | 0 | 36.1 | 593 | - | Comparative Example |
| 4 | 800 | 20 | 8 | 0.08 | 50 | 2.2 | 1.7 | 22 | 0 | 36.1 | 592 | - | Comparative Example |
| 5 | 800 | 20 | 8.5 | 0.11 | 50 | 2.2 | 2.3 | 23 | 0 | 34.5 | 595 | - | Invention Example |
| 6 | 800 | 20 | 7.5 | 0.07 | 50 | 1.6 | 2.1 | 22 | 0 | 36.1 | 593 | - | Comparative Example |
| 7 | 800 | 20 | 8 | 0.08 | 50 | 2.2 | 1.7 | 22 | 0 | 36.1 | 592 | - | Comparative Example |
| 8 | 800 | 20 | 8.5 | 0.11 | 50 | 2.2 | 2.3 | 23 | 0 | 34.5 | 595 | - | Invention Example |
| 9 | 800 | 20 | 9 | 0.12 | 50 | 2.8 | 3.1 | 23 | 0 | 34.0 | 598 | - | Invention Example |
| 10 | 800 | 20 | 10 | 0.16 | 50 | 6.3 | 7.6 | 22 | 0 | 33.1 | 597 | - | Invention Example |
| 11 | 800 | 20 | 12 | 0.24 | 50 | 24 | 29 | 22 | 0 | 33.3 | 592 | - | Invention Example |
| 12 | 800 | 20 | 15 | 0.39 | 50 | 37 | 43 | 23 | 0 | 33.2 | 596 | - | Invention Example |
| 13 | 800 | 2 | 7 | 0.11 | 50 | 2.6 | 3.3 | 21 | 0 | 33.9 | 595 | - | Invention Example |

EP 4 365 318 A1

10

| № | Finishing annealing condition | | | | | Residual stress | | Steel sheet properties | | | | Other conditions | Remarks |
|---|---|---|---|---|---|---|---|---|---|---|---|---|---|
| | Maximum reached temperature (°C) | Soaking time (s) | Line tension (MPa) | $\varepsilon/t$ | Cooling rate (°C/s) | $\sigma_S$ (MPa) | $\sigma_C$ (MPa) | Ferrite grain size ($\mu$m) | Non-recrystallized ratio (%) | Eddy current loss $W_{e3/5k}$ (W/kg) | Yield stress (MPa) | | |
| 14 | 800 | 1 | 9 | 0.28 | 50 | 26 | 31 | 21 | 0 | 33.1 | 601 | - | Invention Example |
| 15 | 800 | 20 | 10 | 0.15 | 41 | 5.3 | 6.1 | 22 | 0 | 33.6 | 602 | - | Invention Example |
| 16 | 800 | 20 | 10 | 0.15 | 37 | 1.5 | 1.5 | 22 | 0 | 35.9 | 598 | - | Comparative Example |
| 17 | 800 | 20 | 10 | 0.15 | 29 | 0.4 | 0.5 | 22 | 0 | 36.3 | 597 | - | Comparative Example |
| 18 | 800 | 20 | 10 | 0.15 | 24 | 0.5 | 0.6 | 22 | 0 | 36.3 | 592 | - | Comparative Example |
| 19 | 710 | 10 | 11 | 0.01 | 50 | 0.3 | 0.5 | 9 | 23 | 34.9 | 713 | - | Comparative Example |
| 20 | 710 | 10 | 14 | 0.06 | 50 | 0.4 | 0.6 | 8 | 25 | 34.8 | 712 | - | Comparative Example |
| 21 | 710 | 10 | 15 | 0.14 | 50 | 6.1 | 6.5 | 8 | 24 | 32.2 | 715 | - | Invention Example |
| 22 | 710 | 10 | 19 | 0.23 | 50 | 25 | 27 | 9 | 23 | 32.3 | 714 | - | Invention Example |
| 23 | 800 | 20 | 10 | 0.16 | 50 | -4.8 | 6.6 | 23 | 0 | 48.5 | 625 | Shot-peening | Comparative Example |
| 24 | 800 | 20 | 10 | 0.16 | 50 | -17 | 13 | 23 | 0 | 49.2 | 635 | Shot-peening | Comparative Example |
| 25 | 880 | 20 | 9 | 0.16 | 50 | 5.9 | 6.4 | 41 | 0 | 34.1 | 541 | - | Invention Example |
| 26 | 1040 | 20 | 5 | 0.15 | 50 | 6.3 | 6.9 | 110 | 0 | 40.6 | 482 | - | Comparative Example |

EP 4 365 318 A1

Example 2

Steel having an ingredient composition containing the various ingredients shown in Table 2, with the rest composed of Fe and inevitable impurities was produced by an ordinary refining process and continuously cast into a steel material (slab). Next, this slab was heated at 1150°C for 30 minutes and then hot-rolled into a 1.8 mm-thick hot-rolled sheet. Then, this hot-rolled sheet was subjected to hot-band annealing at 940°C for 10 seconds, and was then pickled and cold-rolled into a cold-rolled sheet with a final sheet thickness (product sheet thickness) of 0.20 mm. Next, this cold-rolled sheet was subjected to a soaking treatment in a continuous annealing furnace for a soaking time of 10 seconds with a maximum reached temperature set to 750°C, and was then subjected to finishing annealing under the condition of the average cooling rate from a temperature (maximum reached temperature - 50°C) to 500°C being 55°C/s. In the process, the line tension applied to the steel sheet was changed to various values within a range of 5 to 20 MPa, and the plastic elongation ratio ε (%) between before and after the finishing annealing was measured by the above-described method.

From the finishing-annealed sheet thus obtained, 30 mm-wide and 280 mm-long test specimens with the length direction oriented in the sheet width direction were taken. The iron loss $W_{3/5k}$ was measured by an Epstein test, and the value of the eddy current loss $W_{e3/5k}$ at 0.3 T and 5 kHz was calculated by the above-described method. Further, the residual stresses $\sigma_s$ and $\sigma_c$ in the sheet width direction of the finishing-annealed sheet were measured by the above-described method. In addition, JIS No. 5 test specimens with the tensile direction oriented in the rolling direction were taken from the finishing-annealed sheet, and a tensile test was conducted in accordance with JIS Z 2241 to measure the yield stress.

The results of these measurements are included in Table 2. Since the iron loss varies greatly even among steel sheets of the same sheet thickness depending on the contents of Si and Al that have an influence on the specific resistance of steel, the superiority or inferiority of the eddy current loss $W_{e3/5k}$ was evaluated by an iron loss reference value W defined by the following formula:

$$W = (700 \times t) / (Si + Al),$$

where t is the sheet thickness (mm), and Si and Al are the respective contents (mass%).

According to these results, the non-oriented electrical steel sheets produced under conditions complying with the present invention each exhibited high strength and a low value of the eddy current loss $W_{e3/5k}$.

[Table 2-1]

| № | Ingredient composition (mass%) | | | | | | | | | | Line tension (MPa) | ε/t | Residual stress (MPa) | | Ferrite grain size (μm) | Eddy current loss We3/5k(W/kg) | | Yield stress (MPa) | Remarks |
|---|---|---|---|---|---|---|---|---|---|---|---|---|---|---|---|---|---|---|---|
| | C | Si | Mn | P | S | Al | N | Cr | O | Others | | | $\sigma_S$ | $\sigma_C$ | | Measured value | Reference value W | | |
| 1 | 0.0018 | 3.32 | 0.23 | 0.02 | 0.0013 | 0.72 | 0.0012 | 0.01 | 0.0011 | - | 6 | 0.03 | 0.4 | 0.6 | 16 | 36.5 | 34.7 | 513 | Comparative Example |
| 2 | 0.0018 | 3.32 | 0.23 | 0.02 | 0.0013 | 0.72 | 0.0012 | 0.01 | 0.0011 | - | 9 | 0.14 | 4.9 | 5.1 | 15 | 33.9 | 34.7 | 512 | Invention Example |
| 3 | 0.0018 | 3.32 | 0.23 | 0.02 | 0.0013 | 0.72 | 0.0012 | 0.01 | 0.0011 | - | 11 | 0.17 | 12 | 13 | 15 | 33.3 | 34.7 | 515 | Invention Example |
| 4 | 0.0006 | 3.72 | 0.42 | 0.01 | 0.0016 | 0.53 | 0.0014 | 0.08 | 0.0012 | - | 7 | 0.04 | 0.3 | 0.5 | 16 | 34.7 | 32.9 | 542 | Comparative Example |
| 5 | 0.0006 | 3.72 | 0.42 | 0.01 | 0.0016 | 0.52 | 0.0014 | 0.08 | 0.0012 | - | 10 | 0.16 | 5.7 | 6.1 | 16 | 32.3 | 33.0 | 545 | Invention Example |
| 6 | 0.0006 | 3.72 | 0.42 | 0.01 | 0.0016 | 0.55 | 0.0014 | 0.08 | 0.0012 | - | 12 | 0.34 | 28 | 29 | 15 | 31.2 | 32.8 | 543 | Invention Example |
| 7 | 0.0013 | 3.64 | 0.43 | 0.01 | 0.0005 | 1.34 | 0.0009 | 0.05 | 0.0005 | - | 8 | 0.06 | 0.4 | 0.5 | 15 | 29.8 | 28.1 | 623 | Comparative Example |
| 8 | 0.0013 | 3.64 | 0.43 | 0.01 | 0.0005 | 1.34 | 0.0009 | 0.05 | 0.0005 | - | 11 | 0.15 | 5.3 | 5.9 | 16 | 27.8 | 28.1 | 625 | Invention Example |
| 9 | 0.0013 | 3.64 | 0.43 | 0.01 | 0.0005 | 1.34 | 0.0009 | 0.05 | 0.0005 | - | 13 | 0.32 | 26 | 26 | 16 | 26.9 | 28.1 | 621 | Invention Example |
| 10 | 0.0014 | 3.68 | 1.82 | 0.02 | 0.0009 | 1.28 | 0.0013 | 0.02 | 0.0015 | - | 13 | 0.29 | 24 | 25 | 17 | 27.0 | 28.2 | 624 | Invention Example |
| 11 | 0.0015 | 3.67 | 0.62 | 0.01 | 0.0011 | 1.29 | 0.0015 | 1.56 | 0.0013 | - | 13 | 0.27 | 23 | 25 | 17 | 27.0 | 28.2 | 625 | Invention Example |
| 12 | 0.0012 | 2.65 | 0.34 | 0.01 | 0.0015 | 1.83 | 0.0011 | 0.03 | 0.0018 | - | 6 | 0.02 | 0.5 | 0.5 | 15 | 33.2 | 31.3 | 526 | Comparative Example |
| 13 | 0.0008 | 2.63 | 0.32 | 0.01 | 0.0015 | 1.82 | 0.0012 | 0.02 | 0.0021 | - | 11 | 0.18 | 13 | 14 | 15 | 29.4 | 31.5 | 527 | Invention Example |

EP 4 365 318 A1

13

(continued)

| № | Ingredient composition (mass%) | | | | | | | | | | Line tension (MPa) | ε/t | Residual stress (MPa) | | Ferrite grain size (μm) | Eddy current loss We3/5k(W/kg) | | Yield stress (MPa) | Remarks |
| --- | --- | --- | --- | --- | --- | --- | --- | --- | --- | --- | --- | --- | --- | --- | --- | --- | --- | --- | --- |
| | C | Si | Mn | P | S | Al | N | Cr | O | Others | | | $\sigma_S$ | $\sigma_C$ | | Measured value | Reference value W | | |
| 14 | 0.0009 | 2.95 | 0.35 | 0.01 | 0.0014 | 1.62 | 0.0016 | 0.01 | 0.0011 | - | 14 | 0.31 | 26 | 27 | 14 | 28.5 | 30.6 | 538 | Invention Example |
| 15 | 0.0005 | 3.78 | 0.05 | 0.07 | 0.0012 | 0.001 | 0.0011 | 0.03 | 0.0018 | - | 14 | 0.28 | 25 | 27 | 16 | 35.2 | 37.0 | 545 | Invention Example |
| 16 | 0.0017 | 3.79 | 0.05 | 0.16 | 0.0014 | 0.001 | 0.0015 | 0.02 | 0.0019 | - | 14 | 0.28 | 24 | 26 | 17 | 34.8 | 36.9 | 563 | Invention Example |
| 17 | 0.015 | 3.64 | 0.65 | 0.01 | 0.0013 | 1.26 | 0.0015 | 2.15 | 0.0013 | - | 11 | 0.21 | 19 | 20 | 15 | 26.5 | 28.6 | 629 | Invention Example |
| 18 | 0.0012 | 3.68 | 0.63 | 0.01 | 0.0015 | 1.28 | 0.0013 | 2.87 | 0.0012 | - | 13 | 0.27 | 24 | 25 | 15 | 25.8 | 28.2 | 634 | Invention Example |
| 19 | 0.0012 | 3.74 | 0.52 | 0.01 | 0.0013 | 1.35 | 0.0012 | 0.22 | 0.0010 | Sb:0.02 | 12 | 0.30 | 25 | 25 | 16 | 26.9 | 27.5 | 625 | Invention Example |
| 20 | 0.0011 | 3.73 | 0.51 | 0.01 | 0.0012 | 1.36 | 0.0011 | 0.21 | 0.0012 | Sb:0.06 | 12 | 0.30 | 25 | 26 | 16 | 26.8 | 27.5 | 623 | Invention Example |
| 21 | 0.0015 | 3.73 | 0.50 | 0.01 | 0.0008 | 1.31 | 0.0013 | 0.06 | 0.0013 | Sn:0.01 | 12 | 0.30 | 25 | 25 | 16 | 26.8 | 27.8 | 626 | Invention Example |
| 22 | 0.0012 | 3.71 | 0.52 | 0.01 | 0.0006 | 1.32 | 0.0011 | 0.05 | 0.0011 | Sn:0.04 | 12 | 0.29 | 25 | 26 | 16 | 26.7 | 27.8 | 625 | Invention Example |

EP 4 365 318 A1

[Table 2-2]

| № | Ingredient composition (mass%) | | | | | | | | | | Line tension (MPa) | ε/t | Residual stress(MPa) | | Ferrite grain size (μm) | Eddy current loss $W_{e3/5k}$ (W/kg) | | Yield stress (MPa) | Remarks |
|---|---|---|---|---|---|---|---|---|---|---|---|---|---|---|---|---|---|---|---|
| | C | Si | Mn | P | S | Al | N | Cr | O | Others | | | $\sigma_S$ | $\sigma_C$ | | Measured value | Reference value W | | |
| 23 | 0.0016 | 3.74 | 0.45 | 0.01 | 0.0005 | 1.32 | 0.0011 | 0.06 | 0.0012 | Ca: 0.0025 | 12 | 0.27 | 24 | 24 | 17 | 26.8 | 27.6 | 623 | Invention Example |
| 24 | 0.0015 | 3.75 | 0.48 | 0.01 | 0.0006 | 1.33 | 0.0012 | 0.05 | 0.0015 | Ca: 0.0041 | 12 | 0.28 | 25 | 25 | 17 | 26.7 | 27.6 | 624 | Invention Example |
| 25 | 0.0015 | 3.73 | 0.52 | 0.01 | 0.0006 | 1.34 | 0.0011 | 0.03 | 0.0011 | Mg: 0.0007 | 12 | 0.30 | 26 | 28 | 17 | 26.9 | 27.6 | 622 | Invention Example |
| 26 | 0.0014 | 3.72 | 0.53 | 0.01 | 0.0005 | 1.35 | 0.0011 | 0.04 | 0.0012 | Mg: 0.0015 | 12 | 0.31 | 27 | 29 | 17 | 26.8 | 27.6 | 623 | Invention Example |
| 27 | 0.0012 | 3.73 | 0.52 | 0.01 | 0.0005 | 1.32 | 0.0012 | 0.04 | 0.0011 | REM: 0.011 | 12 | 0.30 | 26 | 26 | 17 | 26.9 | 27.6 | 625 | Invention Example |
| 28 | 0.0013 | 3.74 | 0.51 | 0.01 | 0.0006 | 1.33 | 0.0013 | 0.03 | 0.0012 | REM: 0.023 | 12 | 0.30 | 26 | 27 | 17 | 26.9 | 27.6 | 622 | Invention Example |
| 29 | 0.0017 | 3.75 | 0.56 | 0.01 | 0.0013 | 0.56 | 0.0015 | 0.04 | 0.0013 | Cu: 0.06 | 12 | 0.30 | 27 | 26 | 15 | 31.1 | 32.5 | 546 | Invention Example |
| 30 | 0.0017 | 3.76 | 0.51 | 0.01 | 0.0013 | 0.56 | 0.0015 | 0.04 | 0.0012 | Cu: 0.45 | 12 | 0.31 | 25 | 27 | 16 | 31.3 | 32.4 | 543 | Invention Example |
| 31 | 0.0019 | 3.73 | 0.57 | 0.01 | 0.0013 | 0.57 | 0.0016 | 0.03 | 0.0014 | Ni:0.08 | 12 | 0.30 | 25 | 26 | 15 | 31.2 | 32.6 | 545 | Invention Example |
| 32 | 0.0017 | 3.73 | 0.55 | 0.01 | 0.0008 | 0.60 | 0.0015 | 0.04 | 0.0011 | Ni:0.43 | 12 | 0.31 | 25 | 25 | 16 | 31.1 | 32.3 | 541 | Invention Example |
| 33 | 0.0018 | 3.76 | 0.54 | 0.01 | 0.0011 | 0.56 | 0.0011 | 0.03 | 0.0012 | Ti: 0.002 | 12 | 0.31 | 26 | 27 | 14 | 31.5 | 32.4 | 548 | Invention Example |
| 34 | 0.0011 | 3.77 | 0.52 | 0.01 | 0.0015 | 0.51 | 0.0008 | 0.04 | 0.0014 | Ti: 0.004 | 12 | 0.30 | 26 | 27 | 12 | 32.3 | 32.7 | 571 | Invention Example |
| 35 | 0.0013 | 3.78 | 0.58 | 0.01 | 0.0009 | 0.57 | 0.0014 | 0.03 | 0.0009 | Nb: 0.001 | 12 | 0.31 | 26 | 27 | 14 | 31.5 | 32.2 | 553 | Invention Example |

| № | Ingredient composition (mass%) | | | | | | | | | | Line tension (MPa) | $\varepsilon/t$ | Residual stress(MPa) | | Ferrite grain size ($\mu$m) | Eddy current loss $W_{e3/5k}$ (W/kg) | | Yield stress (MPa) | Remarks |
|---|---|---|---|---|---|---|---|---|---|---|---|---|---|---|---|---|---|---|---|
| | C | Si | Mn | P | S | Al | N | Cr | O | Others | | | $\sigma_S$ | $\sigma_C$ | | Measured value | Reference value W | | |
| 36 | 0.0015 | 3.75 | 0.52 | 0.01 | 0.0013 | 0.51 | 0.0012 | 0.04 | 0.0015 | Nb: 0.003 | 12 | 0.31 | 27 | 27 | 11 | 32.4 | 32.9 | 586 | Invention Example |
| 37 | 0.0012 | 3.71 | 0.58 | 0.01 | 0.0013 | 0.55 | 0.0008 | 0.03 | 0.0014 | V:0.004 | 12 | 0.29 | 25 | 26 | 15 | 31.4 | 32.8 | 549 | Invention Example |
| 38 | 0.0010 | 3.70 | 0.51 | 0.01 | 0.0008 | 0.59 | 0.0017 | 0.04 | 0.0014 | V:0.008 | 12 | 0.31 | 26 | 25 | 14 | 31.9 | 32.6 | 548 | Invention Example |
| 39 | 0.0015 | 3.79 | 0.50 | 0.01 | 0.0012 | 0.53 | 0.0013 | 0.03 | 0.0010 | Ta: 0.001 | 12 | 0.31 | 25 | 27 | 14 | 31.5 | 32.5 | 552 | Invention Example |
| 40 | 0.0020 | 3.78 | 0.58 | 0.01 | 0.0015 | 0.55 | 0.0008 | 0.03 | 0.0008 | Ta: 0.002 | 12 | 0.30 | 26 | 27 | 13 | 31.8 | 32.3 | 563 | Invention Example |
| 41 | 0.0010 | 3.75 | 0.53 | 0.01 | 0.0011 | 0.53 | 0.0015 | 0.03 | 0.0008 | B: 0.0004 | 12 | 0.31 | 26 | 25 | 14 | 31.5 | 32.7 | 549 | Invention Example |
| 42 | 0.0014 | 3.73 | 0.53 | 0.01 | 0.0015 | 0.52 | 0.0010 | 0.04 | 0.0014 | B: 0.0008 | 12 | 0.31 | 25 | 26 | 12 | 32.1 | 32.9 | 576 | Invention Example |
| 43 | 0.0011 | 3.80 | 0.57 | 0.01 | 0.0017 | 0.52 | 0.0016 | 0.03 | 0.0010 | Ga: 0.0015 | 12 | 0.31 | 26 | 26 | 14 | 31.5 | 32.5 | 556 | Invention Example |
| 44 | 0.0019 | 3.78 | 0.55 | 0.01 | 0.0016 | 0.59 | 0.0013 | 0.04 | 0.0014 | Ga: 0.0036 | 12 | 0.29 | 26 | 25 | 13 | 32.2 | 32.1 | 562 | Invention Example |

[Table 2-3]

| № | Ingredient composition (mass%) | | | | | | | | | | Line tension (MPa) | $\varepsilon/t$ | Residual stress (MPa) | | Ferrite grain size ($\mu$m) | Eddy current loss $W_{e3/5k}$ (W/kg) | | Yield stress (MPa) | Remarks |
|---|---|---|---|---|---|---|---|---|---|---|---|---|---|---|---|---|---|---|---|
| | C | Si | Mn | P | S | Al | N | Cr | O | Others | | | $\sigma_S$ | $\sigma_C$ | | Measured value | Reference value W | | |
| 45 | 0.0014 | 3.70 | 0.55 | 0.01 | 0.0015 | 0.51 | 0.0008 | 0.03 | 0.0016 | Pb: 0.0003 | 12 | 0.29 | 27 | 26 | 14 | 31.5 | 33.2 | 550 | Invention Example |
| 46 | 0.0018 | 3.80 | 0.56 | 0.01 | 0.0016 | 0.51 | 0.0014 | 0.04 | 0.0016 | Pb: 0.0015 | 12 | 0.32 | 27 | 26 | 11 | 32.3 | 32.5 | 589 | Invention Example |
| 47 | 0.0017 | 3.72 | 0.60 | 0.01 | 0.0017 | 0.53 | 0.0014 | 0.04 | 0.0013 | Zn: 0.002 | 12 | 0.30 | 26 | 26 | 15 | 31.8 | 32.9 | 545 | Invention Example |
| 48 | 0.0013 | 3.80 | 0.56 | 0.01 | 0.0013 | 0.54 | 0.0011 | 0.03 | 0.0012 | Zn: 0.004 | 12 | 0.31 | 27 | 26 | 14 | 32.1 | 32.3 | 557 | Invention Example |
| 49 | 0.0013 | 3.75 | 0.58 | 0.01 | 0.0008 | 0.50 | 0.0009 | 0.03 | 0.0012 | Mo: 0.01 | 12 | 0.31 | 25 | 26 | 15 | 31.3 | 32.9 | 551 | Invention Example |
| 50 | 0.0015 | 3.76 | 0.56 | 0.01 | 0.0011 | 0.56 | 0.0009 | 0.03 | 0.0013 | Mo: 0.04 | 12 | 0.29 | 27 | 26 | 15 | 32.0 | 32.4 | 548 | Invention Example |
| 51 | 0.0012 | 3.79 | 0.58 | 0.01 | 0.0013 | 0.59 | 0.0008 | 0.03 | 0.0013 | W:0.01 | 12 | 0.32 | 27 | 25 | 15 | 31.5 | 31.9 | 549 | Invention Example |
| 52 | 0.0020 | 3.73 | 0.60 | 0.01 | 0.0015 | 0.56 | 0.0017 | 0.04 | 0.0011 | W:0.03 | 12 | 0.30 | 25 | 26 | 14 | 32.1 | 32.6 | 547 | Invention Example |
| 53 | 0.0015 | 3.76 | 0.55 | 0.01 | 0.0013 | 0.55 | 0.0016 | 0.03 | 0.0017 | Ge: 0.005 | 12 | 0.31 | 27 | 27 | 15 | 30.9 | 32.4 | 549 | Invention Example |
| 54 | 0.0012 | 3.72 | 0.50 | 0.01 | 0.0016 | 0.55 | 0.0012 | 0.04 | 0.0015 | Ge: 0.02 | 12 | 0.32 | 26 | 26 | 14 | 30.5 | 32.7 | 553 | Invention Example |
| 55 | 0.0014 | 3.73 | 0.57 | 0.01 | 0.0016 | 0.58 | 0.0009 | 0.04 | 0.0011 | As:0.01 | 12 | 0.32 | 26 | 26 | 16 | 30.8 | 32.5 | 543 | Invention Example |
| 56 | 0.0011 | 3.80 | 0.54 | 0.01 | 0.0012 | 0.60 | 0.0011 | 0.03 | 0.0012 | As:0.03 | 12 | 0.30 | 26 | 25 | 15 | 30.6 | 31.8 | 542 | Invention Example |
| 57 | 0.0019 | 3.73 | 0.54 | 0.01 | 0.0016 | 0.57 | 0.0013 | 0.03 | 0.0016 | Co: 0.006 | 12 | 0.31 | 27 | 27 | 15 | 30.8 | 32.5 | 543 | Invention Example |

(continued)

| № | Ingredient composition (mass%) | | | | | | | | | | Line tension (MPa) | ε/t | Residual stress (MPa) | | Ferrite grain size (μm) | Eddy current loss $W_{e3/5k}$ (W/kg) | | Yield stress (MPa) | Remarks |
| | C | Si | Mn | P | S | Al | N | Cr | O | Others | | | $\sigma_S$ | $\sigma_C$ | | Measured value | Reference value W | | |
|---|---|---|---|---|---|---|---|---|---|---|---|---|---|---|---|---|---|---|---|---|
| 58 | 0.0015 | 3.76 | 0.57 | 0.01 | 0.0016 | 0.56 | 0.0010 | 0.04 | 0.0012 | Co: 0.03 | 12 | 0.30 | 26 | 26 | 14 | 30.6 | 32.4 | 555 | Invention Example |
| 59 | 0.0012 | 4.25 | 0.52 | 0.01 | 0.0011 | 0.21 | 0.0011 | 0.04 | 0.0008 | - | 12 | 0.30 | 26 | 27 | 15 | 29.5 | 31.4 | 545 | Invention Example |
| 60 | 0.0019 | 2.51 | 0.53 | 0.01 | 0.0015 | 1.83 | 0.0010 | 0.04 | 0.0016 | - | 12 | 0.30 | 26 | 25 | 16 | 30.5 | 32.3 | 542 | Invention Example |
| 61 | 0.0036 | 3.71 | 0.51 | 0.01 | 0.0014 | 0.54 | 0.0008 | 0.03 | 0.0017 | - | 12 | 0.29 | 25 | 25 | 15 | 31.5 | 33.0 | 546 | Invention Example |
| 62 | 0.0011 | 3.77 | 0.58 | 0.01 | 0.0041 | 0.57 | 0.0014 | 0.03 | 0.0007 | - | 12 | 0.30 | 26 | 26 | 13 | 31.9 | 32.3 | 567 | Invention Example |
| 63 | 0.0016 | 3.75 | 0.51 | 0.01 | 0.0016 | 0.53 | 0.0041 | 0.04 | 0.0015 | - | 12 | 0.29 | 26 | 26 | 13 | 32.2 | 32.8 | 559 | Invention Example |
| 64 | 0.0015 | 3.79 | 0.50 | 0.01 | 0.0008 | 0.53 | 0.0009 | 0.04 | 0.0046 | - | 12 | 0.32 | 26 | 26 | 12 | 32.1 | 32.4 | 575 | Invention Example |

**Claims**

1. A non-oriented electrical steel sheet **characterized in that**:

    an average ferrite grain size is smaller than 50 $\mu$m;
    a yield stress is 500 MPa or higher; and
    compressive residual stresses $\sigma_s$ and $\sigma_c$ in a sheet width direction at a steel sheet surface and a sheet-thickness center part, respectively, measured by an X-ray stress measurement method are each 2.0 MPa or higher, wherein, as the X-ray stress measurement method, a $2\theta$-$\sin^2\psi$ method using an $\alpha$-Fe (211) peak is used.

2. The non-oriented electrical steel sheet according to claim 1, wherein the non-oriented electrical steel sheet has an ingredient composition containing C: 0 to 0.0050 mass%, Si: 2.0 to 5.0 mass%, Mn: 0 to 3.0 mass%, P: 0 to 0.2 mass%, S: 0 to 0.0050 mass%, Al: 0 to 3.0 mass%, N: 0 to 0.0050 mass%, Cr: 0 to 3.0 mass%, and O: 0 to 0.0050 mass%, with the rest composed of Fe and inevitable impurities.

3. The non-oriented electrical steel sheet according to claim 2, wherein the non-oriented electrical steel sheet further contains at least one group selected from the following Groups A to D in addition to the above-described ingredient composition:

    - Group A: at least one of Sn: 0 to 0.20 mass% and Sb: 0 to 0.20 mass%;
    - Group B: at least one of Ca: 0 to 0.01 mass%, Mg: 0 to 0.01 mass%, and REM: 0 to 0.05 mass%;
    - Group C: at least one of Cu: 0 to 0.5 mass% and Ni: 0 to 0.5 mass%; and
    - Group D: at least one of Ge: 0 to 0.05 mass%, As: 0 to 0.05 mass%, and Co: 0 to 0.05 mass%.

4. The non-oriented electrical steel sheet according to claim 2 or 3, wherein the non-oriented electrical steel sheet further contains at least one group selected from the following Groups E to I in addition to the above-described ingredient composition:

    - Group E: at least one of Ti: 0 to 0.005 mass%, Nb: 0 to 0.005 mass%, V: 0 to 0.010 mass%, and Ta: 0 to 0.002 mass%;
    - Group F: at least one of B: 0 to 0.002 mass% and Ga: 0 to 0.005%;
    - Group G: Pb: 0 to 0.002 mass%;
    - Group H: Zn: 0 to 0.005 mass%; and
    - Group I: at least one of Mo: 0 to 0.05 mass% and W: 0 to 0.05 mass%.

5. The non-oriented electrical steel sheet according to any one of claims 1 to 4, wherein a non-recrystallized texture in a cross-section along a sheet thickness parallel to a rolling direction accounts for 1% or more as an area ratio.

6. A production method of the non-oriented electrical steel sheet according to any one of claims 1 to 5 in which a slab having the ingredient composition according to any one of claims 2 to 4 is subjected to hot rolling, hot-band annealing, cold rolling, and finishing annealing in a continuous annealing furnace, **characterized in that**:

    a maximum reached temperature in the finishing annealing is set to be lower than 900°C;
    an average cooling rate from a temperature (maximum reached temperature - 50°C) to 500°C in a cooling process of the finishing annealing is set to 40°C/s or higher; and
    a parameter $\varepsilon$/t defined from a plastic elongation ratio $\varepsilon$ (%) in a rolling direction between before and after the finishing annealing and a soaking time t (s) in the finishing annealing is set to 0.10 or higher.

FIG. 1

FIG. 2

| INTERNATIONAL SEARCH REPORT | International application No. |
|---|---|
| | **PCT/JP2022/025040** |

**A. CLASSIFICATION OF SUBJECT MATTER**

*C21D 8/12*(2006.01)i; *C21D 9/46*(2006.01)i; *C22C 38/00*(2006.01)i; *C22C 38/38*(2006.01)i; *C22C 38/60*(2006.01)i; *H01F 1/147*(2006.01)i
FI: C22C38/00 303U; C22C38/38; C21D8/12 A; C21D9/46 501A; H01F1/147 175; C22C38/60

According to International Patent Classification (IPC) or to both national classification and IPC

**B. FIELDS SEARCHED**

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 111057821 A (SHOUGANG ZHIXIN QIANAN ELECTROMAGNETIC MATERIALS CO., LTD.) 24 April 2020 (2020-04-24)<br>paragraphs [0027]-[0059], [0068]-[0080], tables 1-6 | 1-6 |
| A | JP 2012-36455 A (SUMITOMO METAL IND., LTD.) 23 February 2012 (2012-02-23)<br>entire text, all drawings | 1-6 |
| A | JP 2009-185357 A (JFE STEEL CORP.) 20 August 2009 (2009-08-20)<br>entire text, all drawings | 1-6 |
| A | JP 1-219125 A (NKK CORP.) 01 September 1989 (1989-09-01)<br>entire text, all drawings | 1-6 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025040**

| Patent document cited in search report | | | Publication date (day/month/year) | Patent family member(s) | Publication date (day/month/year) |
|---|---|---|---|---|---|
| CN | 111057821 | A | 24 April 2020 | EP 3872195 A1 paragraphs [0021]-[0047], [0055]-[0059], tables 1-6 WO 2021/128409 A1 | |
| JP | 2012-36455 | A | 23 February 2012 | (Family: none) | |
| JP | 2009-185357 | A | 20 August 2009 | (Family: none) | |
| JP | 1-219125 | A | 01 September 1989 | (Family: none) | |

Form PCT/ISA/210 (patent family annex) (January 2015)

**REFERENCES CITED IN THE DESCRIPTION**

**Patent documents cited in the description**

- JP 2014210978 A

- JP 2008231504 A